# FASCICULE DE BREVET EUROPEEN

(11) **EP 1 716 365 B1**
(45) Date de publication et mention de la délivrance du brevet: **11.07.2007**
(21) Numéro de dépôt: 05730966.8
(22) Date de dépôt: 16.02.2005
(51) Int. Cl.: F23G 5/08, F23G 5/14

(54) **DISPOSITIF ET PROCEDE DE DESTRUCTION DE DECHETS LIQUIDES, PULVERULENTS OU GAZEUX PAR PLASMA INDUCTIF**
VORRICHTUNG UND VERFAHREN ZUM ZERSTÖREN VON FLÜSSIGEM, PULVERFÖRMIGEM ODER GASFÖRMIGEM ABFALL UNTER VERWENDUNG VON INDUKTIV GEKOPPELTEM PLASMA
DEVICE AND METHOD FOR DESTROYING LIQUID, POWDER OR GASEOUS WASTE USING AN INDUCTIVELY COUPLED PLASMA

(30) Priorité: 18.02.2004 FR 0450303
(43) Date de publication de la demande: 02.11.2006
(73) Titulaire: COMMISSARIAT A L'ENERGIE ATOMIQUE, 75015 Paris (FR)
(72) Inventeur: MEILLOT, Erick, F-37260 Monts (FR); GUENADOU, David, F-37000 Tours (FR)
(74) Mandataire: Poulin, Gérard
(86) Numéro de dépôt international: PCT/FR2005/050099
(87) Numéro de publication internationale: WO 2005/080873

(56) Documents cités:
- FR-A- 2 640 148
- FR-A- 2 765 322
- US-A- 5 877 471
- US-A- 6 153 158

## Description

### DOMAINE TECHNIQUE

Cette invention est relative à un dispositif et à un procédé de destruction de produits chimiques toxiques ou dangereux par plasma inductif. Ces produits peuvent se trouver sous forme liquide, gazeuse ou pulvérulente et appartiennent à la famille des composés organiques ou organo-halogènés.

### ETAT DE LA TECHNIQUE ANTERIEURE

Depuis une dizaine d'années se pose de façon cruciale le problème du traitement des déchets. En effet, la majorité des déchets était, dans le passé, disposée en « décharge », généralement non gérée. Mais à présent, les changements de nature et de quantité des déchets impliquent une approche industrielle du traitement des déchets.

De nombreuses technologies de traitement sont mises en oeuvre pour traiter les déchets afin de poursuivre sur la voie du développement, mais sans nuire à l'environnement. Ces technologies performantes de destruction de déchets ont en commun de présenter à la fois un procédé de destruction des déchets, des traitements des fumées produites lors de cette destruction et une gestion des résidus liquides ou solides éventuels obtenus.

Généralement, on utilise des procédés thermiques de destruction des déchets pour surmonter le problème posé par la stabilité de nombreux composés chimiques. Ainsi, les installations de destruction de produits dangereux sont traditionnellement des incinérateurs. Par exemple, les produits liquides sont mélangés à des produits solides en vue d'être brûlés. Or, en incinérant les déchets, on obtient des résidus volatiles. Par ailleurs, ces installations nécessitent des volumes conséquents pour permettre des réactions complètes entre le carburant et le comburant et diminuer les coûts d'exploitation.

Pour pallier ces inconvénients, de nombreux procédés de destruction de déchets utilisent des technologies plasma. En effet, l'utilisation de procédés plasma a l'avantage de permettre de réduire la taille des installations nécessaires car les incinérateurs plasma permettent d'atteindre de très hautes températures et par conséquent, d'accélérer les réactions chimiques de destruction des déchets et de recombinaison des éléments chimiques ainsi obtenus.

Dans le document **[1]** référencé à la fin de cette description, on s'applique à détruire des produits organiques à l'aide de plasma en arc soufflé. Les gaz provenant de la combustion des déchets sont mélangés avec de l'air, de l'eau ou de l'oxygène à la sortie de la torche plasma dans un étage tubulaire segmenté. Cette technique permet la destruction de déchets gazeux de façon aisée par mélange des déchets avec le gaz plasma issu de la torche à arc. Néanmoins, l'efficacité du procédé est diminuée du fait que les charges à détruire ne passent pas dans la torche. La destruction de produits liquides s'avère plus compliquée du fait de la difficulté de mélanger de façon homogène une phase liquide dans une phase gazeuse à haute température et à haute vitesse issue d'une torche plasma à arc soufflé. Cette difficulté diminue encore le rendement thermique et l'efficacité du procédé.

Un autre exemple d'utilisation de plasmas en arc soufflé est présenté dans les documents **[2]** et **[3].** Les déchets à détruire sont introduits dans une torche tubulaire à plasma en arc soufflé après qu'ils aient subi un changement d'état en phase gazeuse à l'aide d'un brûleur initial.

Dans la technique exposée au document **[2],** le fait de vaporiser la charge pour la faire passer dans la torche plasma permet à la fois d'augmenter l'efficacité de destruction du procédé et complique considérablement le procédé par la surveillance constante de la bonne vaporisation de la charge. L'ajout du brûleur à gaz, qui nécessite un apport d'air important pour fonctionner correctement, conduit à un débit gazeux important dans lequel la proportion massique de la charge est réduite.

Le procédé décrit dans le document **[3]** permet d'introduire la charge à détruire, qu'elle soit liquide ou gazeuse, directement dans la torche plasma. Ce procédé utilise la technologie de stabilisation de l'arc électrique dans la torche par un champ électromagnétique. Ce procédé étant un grand consommateur d'énergie électrique, il est réservé à la destruction de produits présents en très grande quantité. De plus, il n'est pas fait mention du type de gaz utilisé pour le fonctionnement de la torche ou pour le contrôle des recombinaisons atomiques. Ainsi, ce procédé effectue une destruction des produits par pyrolyse, c'est-à-dire sans apport d'oxygène, ce qui conduit à obtenir des gaz fortement réducteurs qui doivent être brûlés en sortie de la torche avant rejet dans l'atmosphère.

Dans le document **[4]**, les déchets sont mélangés à de l'eau ou du méthanol et sont introduits dans une torche tubulaire à arc. De l'oxygène, à la place de l'air, est également employé comme gaz plasma. L'objectif de ces modifications consiste à améliorer le rendement de destruction des déchets. Cette technique utilise une torche segmentée tubulaire à arc, technologie relativement peu courante qui nécessite une bonne connaissance de la technologie plasma afin de définir des paramètres de fonctionnement stables. L'introduction de deux phases (liquide et gazeuse) dans ce type de technologie ne facilite pas l'acquisition d'un fonctionnement stable.

Dans le document **[5]**, on utilise un brûleur plasma pour purifier et dépolluer les gaz sortant d'un incinérateur classique. On obtient ainsi une post-combustion à haute température avec injection d'air dans la chambre de mélange avec les produits gazeux à neutraliser. De nouveau, avec ce procédé, la torche plasma est utilisée comme vecteur énergétique d'appoint pour purifier des gaz. Il n'est donc pas possible de traiter des liquides directement sans les avoir au préalable vaporiser dans un incinérateur classique par exemple, comme il est fait mention dans ce document. Par ailleurs, le fait de ne pas introduire la charge au sein de la torche (pour des raisons d'incompatibilité de matériau) diminue fortement l'efficacité du procédé.

On peut également utiliser des plasmas radiofréquences ou hautes fréquences. Par exemple, dans le document **[6],** les produits solides à détruire sont d'abord introduits dans un four tournant pour y être transformés sous forme gazeuse. Le flux gazeux est ensuite dirigé vers un collecteur où il est mélangé avec un gaz porteur et des déchets liquides éventuels. Cet ensemble est ensuite introduit dans une torche plasma haute fréquence. Les produits issus de la torche passent alors dans une centrifugeuse munie d'un système torique pour générer des champs électriques et magnétiques. Ce système permet alors de séparer les différents éléments. Cette technique a comme vocation première la séparation des différents constituants de charges avec une récupération éventuelle de produits valorisables (éléments lourds...). La torche présente une géométrie particulière dans laquelle sont introduites les charges via un collecteur non défini. Les températures des champs atteintes (300-1000°C) ne permettent pas une destruction au sens strict du terme mais plutôt une mise en condition pour une séparation des différents éléments.

Le document **[7]** concerne la destruction de produits toxiques gazeux d'origine militaire au moyen d'une torche plasma fonctionnant sous mélange d'air/argon. A la sortie de la torche, une trempe air/eau est introduite afin de stopper les réactions. Les charges à détruire passent soit dans un module d'inertage comme décrit dans ce document, soit dans le module à plasma. Ainsi il apparaît que ce sont principalement les gaz qui sont dirigés vers le module à plasma. L'introduction de liquide ne constitue qu'une éventualité suivant la composition de la charge.

### EXPOSÉ DE L'INVENTION

Le but de l'invention est de détruire des produits organiques ou organo-halogènés, seuls ou en mélanges, d'une façon sécuritaire avec rejet contrôlé des produits gazeux non toxiques dans l'atmosphère et piégeage des produits de recombinaisons nocifs pour l'environnement. L'objectif de cette invention est donc de restituer à l'atmosphère des produits exempts de toxicité ou de dangerosité pour l'homme ou son environnement.

L'invention propose un dispositif et un procédé de destruction de produits chimiques, et en particulier de déchets spécifiques qui présentent une haute stabilité et une haute toxicité chimique. En d'autres termes, le dispositif et le procédé selon l'invention permettent de traiter différents produits chimiques qui présentent des risques potentiels pour l'homme ou son environnement et qui nécessitent donc une surveillance attentive et continue au cours de leur durée de vie.

L'invention concerne un procédé de destruction thermique d'au moins un produit organique ou organo-halogèné se présentant sous forme liquide, gazeuse ou pulvérulente. Ce procédé comprend les étapes suivantes :
- mélange:
   - dudit au moins un produit organique avec de l'eau en quantité suffisante pour au moins satisfaire les rapports stoechiométriques entre les atomes de carbone et d'oxygène du mélange,
   ou
   - dudit au moins un produit organo-halogèné avec de l'eau en quantité suffisante pour au moins satisfaire les rapports stoechiométriques entre les atomes de carbone et d'oxygène du mélange, d'une part, et entre les atomes d'hydrogène et d'halogène du mélange, d'autre part,
- introduction de ce mélange et de gaz plasmagènes au niveau de la bobine d'une torche plasma inductive pour obtenir des gaz dans lesquels une décomposition en éléments atomiques a été induite,
- une première opération de destruction thermique desdits gaz dans lesquels une décomposition en éléments atomiques a été induite, cette première opération de destruction se déroulant dans une chambre de réaction,
- une deuxième opération de destruction thermique des gaz ayant subis la première opération de destruction, cette deuxième opération de destruction se déroulant dans un dispositif de brassage sans apport d'énergie, ces gaz subissant la deuxième opération de destruction thermique étant brassés avec de l'air et/ou de l'oxygène,
- recombinaison par refroidissement d'au moins une partie des gaz issus du dispositif de brassage,
- rejet des gaz détruits.

Le mélange des produits à détruire avec de l'eau est réalisé avec de l'eau sous forme liquide pour les liquides et les poudres, ou de l'eau sous forme de vapeur pour les gaz. Le mélange doit avoir un rapport déchet/eau au minimum équivalent au rapport stoechiométrique atomique entre les atomes de carbone et d'oxygène du mélange. Dans le cas particulier des produits organo-halogènés, il faut en plus que le rapport déchet/eau soit au minimum équivalent au rapport stoechiométrique atomique entre les atomes d'hydrogène et d'halogène du mélange.

Avantageusement, le mélange du au moins un produit organique ou organo-halogèné avec de l'eau est introduit au niveau de la bobine de la torche plasma inductive sous forme pulvérisée si ledit produit organique ou organo-halogèné est sous forme liquide ou pulvérulente, ou sous forme gazeuse si ledit produit organique ou organo-halogèné est sous forme gazeuse.

Avantageusement, le rejet des gaz détruits se fait vers l'atmosphère.

Avantageusement, le dispositif de brassage est un venturi.

Selon un cas particulier, le procédé de destruction comprend en outre une étape de refroidissement des gaz issus de l'étape de recombinaison par refroidissement dans un dispositif permettant d'échanger de la chaleur avec le milieu extérieur.

Avantageusement, le procédé comporte en outre une étape d'analyse des gaz sortant de l'étape de recombinaison par refroidissement.

Avantageusement, le procédé comporte en outre une étape de régulation de la pression des gaz.

Dans ce cas, l'étape de régulation est avantageusement réalisée à l'aide d'un dispositif de pompage (vanne de régulation, pompe à vide, centrale de régulation) appelé groupe vide.

Selon un cas particulier, le procédé comprend au moins une étape de traitement chimique des gaz sortant de l'étape de recombinaison par refroidissement.

Avantageusement, ladite au moins une étape de traitement chimique des gaz est une étape choisie parmi une déhalogénisation, une désoxydation d'oxyde d'azote et une désulfurisation. Ce choix s'effectue suivant la nature des gaz à traiter.

Avantageusement, une pulvérisation d'eau sur les gaz est effectuée avant de réaliser l'étape de traitement chimique desdits gaz. Cette pulvérisation a pour but d'abaisser, si besoin, la température des gaz.

L'invention concerne également un dispositif de destruction thermique d'au moins un produit organique ou organo-halogèné se présentant sous forme liquide, gazeuse ou pulvérulente. Ce dispositif comprend:
- une torche plasma inductive,
- des moyens d'introduction de gaz plasmagènes dans ladite torche,
- des moyens d'introduction d'un mélange d'eau et dudit au moins un produit organique ou organo-halogèné dans ladite torche,
- une chambre de réaction apte à permettre une destruction thermique des gaz sortant de la torche plasma inductive,
- un dispositif permettant de réaliser un brassage des gaz sortant de la chambre de réaction,
- des moyens d'introduction d'air et/ou d'oxygène dans le dispositif de brassage,
- un dispositif permettant de recombiner par refroidissement au moins une partie des gaz issus du dispositif de brassage,
la torche inductive étant reliée à la chambre de réaction, qui est reliée au dispositif de brassage, qui est relié au dispositif de recombinaison.

Avantageusement, le dispositif de destruction comprend des moyens de refroidissement de la torche plasma inductive, de la chambre de réaction, du dispositif de brassage et du dispositif de recombinaison.

Avantageusement, les moyens de refroidissement de la torche plasma inductive, de la chambre de réaction, du dispositif de brassage et du dispositif de recombinaison sont une centrale de refroidissement.

Avantageusement, la chambre de réaction comporte une double paroi dans laquelle circule de l'eau de refroidissement.

Avantageusement, la surface intérieure de la double paroi est recouverte d'un matériau réfractaire. Ce matériau sert alors de protection.

La chambre de réaction est conçue pour que les gaz qu'elle contient puissent atteindre une température suffisamment haute et pendant un temps suffisant pour que les gaz se décomposent en d'autres gaz moins réactifs.

Avantageusement, l'introduction de gaz plasmagènes dans la torche est effectuée par surpression. Avantageusement, les moyens d'introduction de gaz plasmagènes dans la torche sont constitués d'une centrale de gaz classique (bouteille réservoir) où les gaz sont introduits classiquement par surpression.

Avantageusement, les moyens d'introduction d'un mélange d'eau et de déchets dans la torche sont une sonde de pulvérisation si le mélange est sous forme liquide ou de suspensions, ou sont une sonde d'injection si le mélange est sous forme gazeuse.

Avantageusement, le dispositif permettant de réaliser un brassage de gaz est un venturi. Le dispositif permettant de réaliser un brassage d'air, et en particulier le venturi, permet de réaliser directement une post combustion entre les gaz à haute température issus de la décomposition des déchets et les gaz introduits (air ou oxygène) sans aucun apport d'énergie supplémentaire.

Selon un cas particulier, le venturi a une double paroi refroidie par eau.

Avantageusement, le venturi comporte une partie supérieure, appelée convergent, une partie inférieure, appelée divergent, une partie médiane, appelée col, reliant le convergent et le divergent, et des orifices d'entrée d'air.

Avantageusement, le venturi comporte au moins un moyen permettant de distribuer uniformément de l'air sur les parois du venturi.

Avantageusement, le au moins un moyen permettant de distribuer uniformément de l'air sur les parois du venturi est une chambre de répartition comportant des trous disposés sur son périmètre.

Selon un cas particulier, le dispositif permettant de recombiner par refroidissement au moins une partie des gaz issus du dispositif de brassage est une enceinte à double paroi refroidie par eau.

Avantageusement, le dispositif selon l'invention comprend en outre un dispositif permettant d'échanger de la chaleur avec le milieu extérieur et/ou un dispositif permettant de réguler la pression à l'intérieur du dispositif de destruction.

Avantageusement, le dispositif permettant de réguler la pression est un groupe vide.

Avantageusement, le dispositif de destruction comprend en outre, situé après le dispositif de recombinaison de gaz, au moins un dispositif permettant de traiter chimiquement les gaz issus du dispositif de recombinaison.

Avantageusement, le au moins un dispositif permettant de traiter chimiquement les gaz issus du dispositif de recombinaison réalise une réaction choisie parmi une déhalogénisation, une désoxydation d'oxyde d'azote et une désulfurisation. La réaction choisie dépend des compositions chimiques des gaz et de leurs propriétés physico-chimiques.

Les avantages du dispositif et du procédé selon l'invention résident dans :
- le taux de destruction élevé (99,995% au minimum) grâce à l'injection directe des produits à détruire dans la torche plasma,
- l'aspect sécuritaire par le dosage hors installation de la charge, c'est-à-dire des produits à détruire, avec de l'eau,
- le contrôle des recombinaisons des éléments atomiques par l'apport simultané d'oxygène, d'hydrogène avec les éléments carbones et halogènes,
- la taille réduite de l'installation par l'intégration de la technologie plasma et le confinement des réactions dans deux chambres de taille réduite,
- l'acceptation de mélanges complexes de produits à détruire sans à priori avoir une connaissance précise de leur composition.

Le dispositif et le procédé selon l'invention présentent une polyvalence vis-à-vis des déchets à traiter. En effet, la limite d'introduction des déchets dans le dispositif réside dans la non-acceptation de déchets solides en tant que tels. Tout produit qui peut se présenter sous forme liquide, gazeuse, ou même sous forme de suspension peut être accepté.

Le taux de destruction des déchets obtenu par le procédé et le dispositif selon l'invention est de l'ordre de 99,995%, voire 99,999%. Les gaz rejetés par le dispositif ou le procédé de destruction respectent notamment les normes de rejet de produits gazeux en vigueur dans la Communauté Européenne, qui s'est fixé l'objectif « zéro produit toxique » rejeté dans l'atmosphère.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est un schéma de principe illustrant l'installation permettant de réaliser le procédé selon l'invention,
- la figure 2 est un schéma de principe illustrant l'introduction de la charge dans la torche plasma,
- la figure 3 est un schéma de principe de l'étage de destruction,
- la figure 4 est un schéma de principe du venturi.

### EXPOSÉ DÉTAILLÉ DE MODES DE RÉALISATION PARTICULIERS

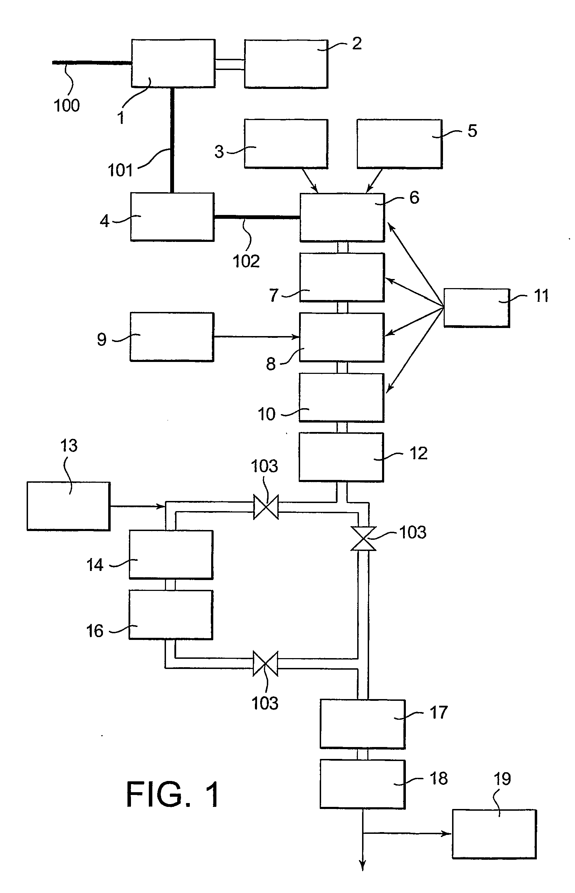

L'installation permettant de réaliser le procédé de destruction thermique selon l'invention est décrite dans la figure 1.

Un générateur électrique 1, branché sur le secteur à 380V/50Hz (référence 100) et refroidi par une centrale de refroidissement 2, alimente une torche plasma 6 en courant haute fréquence par l'intermédiaire d'un tableau de commande 4. Ce tableau de commande 4 peut, par exemple, être un coffret d'accord. La référence 101 représente le câble coaxial reliant le générateur électrique 1 au tableau de commande 4, et la référence 102 illustre un bras d'induction reliant le tableau 4 à la torche plasma 6.

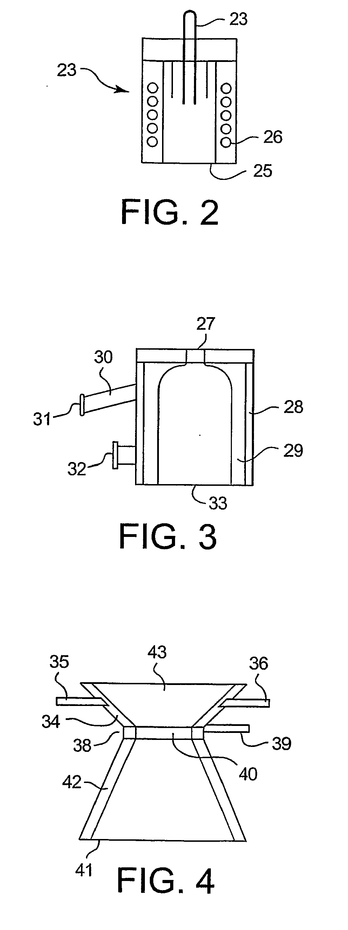

La torche plasma 6 a besoin de recevoir des gaz pour fonctionner. L'introduction de ces gaz de fonctionnement 3 ainsi que l'introduction du mélange eau/déchets à traiter 5 se font directement au sein de la torche 6. Le mélange de l'eau et des déchets, effectué préalablement, est introduit dans la torche 6 au moyen d'une sonde de pulvérisation pour les liquides ou les suspensions, et au moyen d'une sonde d'injection pour les gaz (le principe de l'introduction du mélange eau/déchets dans la torche est reporté sur la figure 2).

Après leur passage dans la torche plasma 6, le gaz plasmagène et le mélange eau/charge débouchent dans une chambre de réaction 7. Cette chambre de réaction 7 a pour fonction de confiner la chaleur produite dans la torche plasma pour permettre ainsi la destruction complète des déchets. Les gaz issus de cette chambre de réaction peuvent ainsi atteindre une température supérieure à 1500°C.

A la sortie de la chambre de réaction 7, les gaz s'écoulent vers un dispositif particulier appelé venturi 8. Le venturi 8 est un dispositif de brassage qui, grâce à une alimentation en comburant (air ou oxygène 9), permet de générer une seconde combustion (post-combustion) entre ce comburant et les gaz issus de la chambre de réaction 7. La figure 4 représente le détail du venturi 8. Ce dispositif permet ainsi de détruire les composés toxiques qui auraient pu échapper au premier stade de destruction dans la chambre de réaction 7. Dans le venturi, les gaz peuvent atteindre une température supérieure à 1200°C après mélange avec le comburant et réaction exothermique de combustion.

Par la suite, les gaz s'écoulent vers un espace 10 dans lequel les gaz sont rapidement refroidis et subissent une étape de recombinaison. Cet espace de recombinaison consiste en une chambre à double paroi refroidie par eau. Dans cet espace 10, la température chute rapidement pour atteindre 200°C en sortie. A la différence de la chambre de réaction 7, l'espace de recombinaison 10 n'est pas isolé thermiquement : sa double paroi est refroidie par circulation d'eau issue de la centrale de refroidissement 2. Dans cet espace, les gaz s'écoulent et se refroidissent par convection naturelle auprès des parois.

Notons que l'ensemble des éléments constitué par la torche inductive 6, la chambre de réaction 7, le venturi 8 et l'étage de recombinaison 10 est refroidi et connecté à une centrale de refroidissement 11.

A la sortie de l'espace de recombinaison 10, les gaz sont analysés. Le dispositif d'analyse 12 permet de vérifier l'efficacité du traitement thermique et de connaître la composition des gaz après ce traitement, mais l'analyse permet surtout de savoir si les gaz doivent en plus subir un traitement chimique.

Si les gaz ont subi un traitement thermique suffisamment pour être rejetés directement dans l'atmosphère, c'est-à-dire si leurs concentrations en composés toxiques ne dépassent pas les limites fixées, les gaz sont envoyés vers un échangeur de chaleur 17. Dans cet échangeur, les gaz sont refroidis et passent ensuite dans un groupe vide 18 qui permet de réguler la pression de travail dans le procédé. La pression de travail est comprise entre quelques millibars et la pression atmosphérique. Après le groupe vide 18, les gaz sont rejetés vers l'atmosphère.

Si les gaz, après le traitement thermique, contiennent encore des composés toxiques de concentrations trop élevées, on les envoie dans un système de traitement. Ce système de traitement dépend des composés que l'on doit traiter. En général, ce système de traitement comprend un système de neutralisation des halogénés 14, un système DENOX permettant la dénitrification catalytique des gaz 16 et éventuellement un système de désulfurisation (non représenté sur la figure 1).

La neutralisation des halogènes s'effectue par une pulvérisation classique d'eau sodée suivant la réaction exemplaire du chlore :

*HCl + NaOH* → *NaCl + H₂O*

La dénitrification des oxydes d'azote s'effectue par exemple par les réactions avec de l'ammoniac :

*NO + NO₂ + 2NH₃ → 2N₂ + 3H₂O*

*4NO + 4NH₃ + O₂ → 4N₂ + 6H₂O*

*2NO₂ + 4NH₃ + O₂ → 3N₂ + 6H₂O*

Eventuellement, on peut effectué une pulvérisation d'eau 13 avant l'entrée des gaz dans le système de traitement des produits halogénés 14 et le passage dans les unités de traitement des oxydes d'azote et/ou de produits soufrés 16. Cela permet d'abaisser la température des gaz en cas d'excès de chaleur pour protéger le système de neutralisation des halogènes.

Des vannes 103 permettent de contrôler le débit de gaz circulant entre différents éléments du dispositif. Par exemple, dans la figure 1, des vannes 103 sont disposées entre le dispositif d'analyse 12 et le système de traitement des produits halogénés 14, entre le dispositif d'analyse 12 et l'échangeur de chaleur 17, et entre les unités de traitement des oxydes d'azote et/ou de produits soufrés 16 et l'échangeur de chaleur 17.

Après avoir subi ces différents traitements, les gaz subissent une analyse 19 pour déterminer s'ils peuvent être rejetés dans l'atmosphère. S'ils sont suffisamment épurés, ils sont refroidis dans l'échangeur de chaleur 17 et passent dans le groupe vide 18. Après le groupe vide 18, les gaz sont rejetés vers l'atmosphère 19. Si les gaz sont encore trop réactifs, ils subissent de nouveau un traitement chimique dans les systèmes 14 et 16.

La figure 2 présente le système d'introduction du mélange charge/eau 5 au sein de la torche plasma.

La torche plasma 6 est une torche haute fréquence ou inductive, sans électrode, et dans laquelle le plasma est généré par un courant à forte tension et haute fréquence circulant dans une bobine 26. On entend par plasma la dissociation d'un gaz en ions, en électrons et en espèces neutres, excitées ou non. Tout type de torche inductive peut convenir.

De préférence, la torche plasma est constituée d'un matériau non-conducteur et perméable aux hautes fréquences.

La charge à traiter doit être mélangée avec une quantité suffisante d'eau. Si la charge à traiter est sous forme liquide ou pulvérulente, l'eau ajoutée est liquide. Si la charge à traiter est gazeuse, l'eau ajoutée sera également gazeuse (vapeur d'eau). La quantité suffisante d'eau à ajouter est atteinte lorsque le rapport charge/eau est, au minimum, équivalent au rapport stoechiométrique atomique entre d'une part les atomes de carbone et d'oxygène, et d'autre part, entre les atomes d'hydrogène et d'halogène, dans le cas particulier des produits organo-halogènés. L'apport simultané d'oxygène et d'hydrogène, via l'eau liquide ou la vapeur d'eau mélangée avec la charge, permet de contrôler les recombinaisons atomiques tout en assurant un niveau de sécurité élevée (pas de risque d'explosion H₂/O₂ par exemple). Ainsi les réactions de recombinaison atomique simultanées sont les suivantes:

*C + O → CO*

*H + Cl → HCl*

Ce mélange ainsi constitué est stocké dans une cuve en attendant d'être injecté dans la torche plasma.

Le mélange eau/déchets est introduit au coeur de la torche plasma 6 sous forme pulvérisée ou gazeuse.

Si le mélange déchets/eau est sous la forme d'un liquide ou d'une suspension, il sera pulvérisé dans la torche plasma. Comme le mélange est entreposé dans une cuve, on utilise une pompe d'alimentation pour amener le mélange jusqu'à l'entrée de la torche et on pulvérise le mélange (ici sous forme de nappe liquide) à l'aide d'une sonde de pulvérisation 23, refroidie par eau et assistée mécaniquement par une introduction de gaz. On précise que l'introduction du mélange dans la torche plasma peut être réalisée par tout type de sonde, pourvu que celle-ci fractionne la nappe liquide en fines gouttelettes.

Si la charge à traiter est une charge gazeuse, le mélange gazeux est introduit au coeur du plasma de la torche plasma par l'intermédiaire d'une pompe d'alimentation et d'une sonde d'injection 23' refroidie par eau. Notons que la sonde de pulvérisation 23 et la sonde d'injection 23' sont identiques, sauf que la sonde d'injection ne nécessite pas d'alimentation en gaz de pulvérisation.

La sonde d'injection 23' ou de pulvérisation 23 est de préférence placée au coeur de la bobine 26 de la torche plasma 6. Ainsi, le mélange liquide, pulvérulent ou gazeux est en contact avec le plasma à l'endroit où sa température est la plus haute. Cette position procure le maximum d'efficacité à la fois en terme de pénétration de la charge dans la veine gazeuse et en terme de destruction du fait du contact intime des deux phases et des hautes températures. La sonde 23' ou 23 peut également être déplacée vers la sortie 25 de la torche.

En d'autres termes, tous les déchets à détruire sont préalablement mélangés à de l'eau soit sous forme liquide pour les déchets liquides (mélange ou émulsion) ou les déchets en poudres (suspension), soit sous forme de vapeur d'eau pour les déchets gazeux avant leur introduction dans le dispositif de destruction thermique.

Le mélange du déchet avec le milieu aqueux ou gazeux constitue un des points clés de la réussite de la destruction du déchet. Le rapport déchet/eau doit au minimum satisfaire le rapport stoechiométrique atomique entre d'une part les atomes de carbone et l'oxygène et d'autre part, entre les atomes d'hydrogène et d'halogène, dans le cas particulier des produits organo-halogènés. Ainsi par exemple, un déchet de dichlorométhane de formule chimique CH₂Cl₂ sera mélangé à de l'eau dans les proportions 1 mole pour 1 mole pour activer la réaction suivante :

*CH₂Cl₂ + H₂O → CO + 2HCl + H₂*

Ce mélange permet d'accroître l'aspect sécurité du dispositif de destruction selon l'invention en évitant l'introduction séparée et simultanée d'oxygène et d'hydrogène dans le plasma. Ce mélange permet également de diminuer les débits de gaz. On dispose donc ainsi d'une installation de taille réduite qui ne nécessite pas de systèmes de traitement des fumées trop importants.

La figure 3 schématise l'étage de destruction. Il y a une chambre de réaction dans laquelle la destruction de la charge va avoir lieu. Cette chambre de réaction 7 comporte une double paroi 28 dans laquelle circule de l'eau de refroidissement. Cette double paroi peut être en acier. La surface intérieure de la double paroi est recouverte d'un matériau réfractaire de protection.

Les gaz issus de la torche 6 pénètrent dans la chambre de réaction 7 par un orifice 27. Un hublot de visée 30 permet de contrôler le bon comportement du gaz passant par l'orifice 27. Un mauvais comportement de l'ionisation du gaz serait caractérisé par :
- des mouvements erratiques et désordonnés de la colonne de gaz,
- des claquages électriques sur les pièces métalliques (bord de torche, sonde d'injection),
- une colonne plasma non parfaitement développée et restant confinée dans la torche 6.

Le contrôle du bon comportement du gaz peut être facilité en plaçant une caméra 31 devant le hublot 30. Un thermocouple 32, placé vers la sortie 33 de la chambre de réaction 7, permet de mesurer la température des gaz en sortie de cette chambre.

Les gaz sortant de la chambre de réaction entrent ensuite dans un dispositif appelé venturi. Le venturi 8 a pour objet de générer une turbulence importante des gaz de réaction issus de la chambre de réaction grâce à un apport d'air froid. Ce mélange de gaz, constitué d'air froid et des produits de réaction, permet, sans apport de chaleur supplémentaire, de générer une post-combustion des gaz issus de la chambre de réaction. On peut ainsi achever la destruction des éventuels gaz réactifs qui n'ont pas été transformés dans la chambre de réaction 7. Dans le venturi, les différentes espèces gazeuses telles que H₂, CO, C... vont réagir avec l'air selon la réaction suivante :

*CO + H₂ + O₂ → CO₂ + H₂O*

Le gaz nocif CO est ainsi transformé en un gaz moins nocif.

Le venturi 8 est en acier et possède une structure à double paroi refroidie par eau (voir sur la figure 4). Il est constitué de trois parties, une partie supérieure, appelée convergent 34, et une partie inférieure, appelée divergent 42, ces deux parties étant rejointes au niveau d'un col 38.

Le convergent 34 est en contact avec la sortie des gaz 33 de la chambre de réaction 7. Le convergent comporte deux orifices 35 et 36 qui permettent d'injecter de l'air ou de l'oxygène à l'entrée du venturi 8 à l'aide d'une chambre de répartition 37. La chambre de répartition est un espace cylindrique de quelques centimètres de hauteur et de largeur sur tout le périmètre de l'entrée du venturi, et dans lequel le gaz 10 va s'écouler. La chambre de répartition 37 est percée d'une multitude de trous, par exemple de trous de diamètre 2 mm et espacés de 2 mm, présents sur tout le périmètre de la chambre de répartition 37. Cette chambre de répartition 37 permet que les gaz contenus dans le convergent 34 soient distribués de façon uniforme près des parois du convergent 34, protégeant ainsi ces mêmes parois des gaz corrosifs à haute température.

Au niveau du col 38 du venturi 8, une deuxième injection d'air ou d'oxygène est réalisée par un orifice 39 à l'aide d'une deuxième chambre de répartition 40. Cette deuxième injection complète la première injection réalisée dans le convergent. Les gaz passent ensuite dans le divergent 42 et sont éjectés par la sortie 41 du venturi pour pénétrer dans l'étage de recombinaison 10.

Un des avantages du dispositif selon l'invention est que la juxtaposition et l'assemblage des différents éléments décrits dans les paragraphes précédents permettent de réaliser une post-combustion des gaz issus de l'étage de destruction sans utiliser de source d'énergie. La juxtaposition des éléments permet en effet de mettre à profit et d'utiliser les hautes températures des gaz issus de la chambre de réaction 7.

Les produits pouvant être traités en utilisant le dispositif ou le procédé de destruction selon l'invention peuvent être, par exemple, des solvants organo-halogènés, des mélanges aqueux pollués de faible pouvoir calorifique, des huiles, des cycles aromatiques, des produits toxiques gazeux type C.F.C., H.C.F.C., des gaz de combat, des produits pulvérulents tels que des explosifs solides sous forme de boue... La seule limitation est que les produits à détruire doivent se trouver sous forme liquide, gazeuse ou pulvérulente.

Par exemple, la destruction du phosgène, produit gazeux, conduit à la décomposition atomique puis à la recombinaison suivante :

*COCl₂ + H₂O → C + 2H + 2O + 2Cl → 2HCl + CO₂*

la concentration molaire initiale du mélange étant de 1 mole de COCl₂ avec 1 mole d'eau pour former 3 moles de produits gazeux.

Par la suite, le HCl réagit avec NaOH :

*2HCl + 2NaOH → 2NaCl + 2H₂O (solution)*

Pour la destruction de produits liquides, par exemple du tétrachlorométhane, on a les réactions de décomposition et de recombinaison suivantes :

*CCl₄ + 2H₂O → C + 4Cl + 4H + 2O → 4HCl + CO₂*

la concentration molaire étant de 1 mole de charge et 2 moles d'eau.

Par la suite, on aura la réaction suivante entre HCl et NaOH :

*4HCl + 4NaOH → 4NaCl + 4H₂O (solution)*

### BIBLIOGRAPHIE

**[1]** Brevet US4438706
**[2]** Brevet US4479443
**[3]** Brevet US4644877
**[4]** Brevet US4886001
**[5]** Brevet US5505909
**[6]** Brevet US5288969
**[7]** Document FR-A-2765322

## Revendications

1. Procédé de destruction thermique d'au moins un produit organique ou organo-halogèné se présentant sous forme liquide, gazeuse ou pulvérulente, le procédé comprenant les étapes suivantes :
- mélange :
- dudit au moins un produit organique avec de l'eau en quantité suffisante pour au moins satisfaire les rapports stoechiométriques entre les atomes de carbone et d'oxygène du mélange,
ou
- dudit au moins un produit organo-halogèné avec de l'eau en quantité suffisante pour au moins satisfaire les rapports stoechiométriques entre les atomes de carbone et d'oxygène du mélange, d'une part, et entre les atomes d'hydrogène et d'halogène du mélange, d'autre part,
- introduction de ce mélange et de gaz plasmagènes au niveau de la bobine (26) d'une torche plasma inductive (6) pour obtenir des gaz dans lesquels une décomposition en éléments atomiques a été induite,
- une première opération de destruction thermique desdits gaz dans lesquels une décomposition en éléments atomiques a été induite, cette première opération de destruction se déroulant dans une chambre de réaction (7),
- une deuxième opération de destruction thermique des gaz ayant subis la première opération de destruction, cette deuxième opération de destruction se déroulant dans un dispositif de brassage (8) sans apport d'énergie, ces gaz subissant la deuxième opération de destruction thermique étant brassés avec de l'air et/ou de l'oxygène,
- recombinaison par refroidissement (10) d'au moins une partie des gaz issus du dispositif de brassage (8),
- rejet (20) des gaz détruits.

2. Procédé de destruction thermique selon la revendication précédente, **caractérisé en ce que** le mélange du au moins un produit organique ou organo-halogèné avec de l'eau est introduit au niveau de la bobine (26) de la torche plasma inductive (6) sous forme pulvérisée si ledit produit organique ou organo-halogèné est sous forme liquide ou pulvérulente, ou sous forme gazeuse si ledit produit organique ou organo-halogèné est sous forme gazeuse.

3. Procédé de destruction thermique selon la revendication 1, **caractérisé en ce que** le dispositif de brassage (8) est un venturi.

4. Procédé de destruction thermique selon la revendication 1, **caractérisé en ce qu'**il comprend en outre une étape de refroidissement des gaz issus de l'étape de recombinaison par refroidissement (10) dans un dispositif (17) permettant d'échanger de la chaleur avec le milieu extérieur.

5. Procédé de destruction thermique selon l'une quelconque des revendications 1 ou 4, **caractérisé en ce qu'**il comporte en outre une étape d'analyse (12) des gaz sortant de l'étape de recombinaison par refroidissement (10).

6. Procédé de destruction thermique selon l'une quelconque des revendications 4 ou 5, **caractérisé en ce qu'**il comporte en outre une étape de régulation de la pression des gaz.

7. Procédé de destruction thermique selon la revendication précédente, **caractérisé en ce que** l'étape de régulation est réalisée à l'aide d'un dispositif de pompage (18) appelé groupe vide.

8. Procédé de destruction thermique selon l'une quelconque des revendications précédentes, **caractérisé en ce qu'**il comprend au moins une étape de traitement chimique des gaz sortant de l'étape de recombinaison par refroidissement.

9. Procédé de destruction thermique selon la revendication précédente, **caractérisé en ce que** la au moins une étape de traitement chimique des gaz est une étape choisie parmi une déhalogénisation (14), une désoxydation d'oxyde d'azote (16) et une désulfurisation.

10. Procédé de destruction thermique selon l'une quelconque des revendications 8 ou 9, **caractérisé en ce qu'**une pulvérisation d'eau (13) sur les gaz est effectuée avant de réaliser l'étape de traitement chimique desdits gaz.

11. Dispositif de destruction thermique d'au moins un produit organique ou organo-halogèné se présentant sous forme liquide, gazeuse ou pulvérulente, comprenant:
- une torche plasma inductive (6),
- des moyens d'introduction de gaz plasmagènes dans ladite torche (6),
- des moyens d'introduction (23,23') d'un mélange d'eau et dudit au moins un produit organique ou organo-halogèné dans ladite torche,
- une chambre de réaction (7) apte à permettre une destruction thermique des gaz sortant de la torche plasma inductive (6),
- un dispositif (8) permettant de réaliser un brassage des gaz sortant de la chambre de réaction (7),
- des moyens d'introduction d'air et/ou d'oxygène (9) dans le dispositif de brassage (8),
- un dispositif (10) permettant de recombiner par refroidissement au moins une partie des gaz issus du dispositif de brassage,
la torche inductive (6) étant reliée à la chambre de réaction (7), qui est reliée au dispositif de brassage (8), qui est relié au dispositif de recombinaison (10).

12. Dispositif de destruction thermique selon la revendication précédente, **caractérisé en ce qu'**il comprend des moyens de refroidissement de la torche plasma inductive, de la chambre de réaction, du dispositif de brassage et du dispositif de recombinaison.

13. Dispositif de destruction thermique selon la revendication précédente, **caractérisé en ce que** lesdits moyens de refroidissement sont une centrale de refroidissement (11).

14. Dispositif de destruction thermique selon l'une quelconque des revendications 11 ou 12, **caractérisé en ce que** la chambre de réaction (7) comporte une double paroi (28) dans laquelle circule de l'eau de refroidissement.

15. Dispositif de destruction thermique selon la revendication précédente, **caractérisé en ce que** la surface intérieure de la double paroi (28) est recouverte d'un matériau réfractaire.

16. Dispositif de destruction thermique selon la revendication 11, **caractérisé en ce que** l'introduction de gaz plasmagènes dans la torche est effectuée par surpression.

17. Dispositif de destruction thermique selon la revendication 11, **caractérisé en ce que** les moyens d'introduction d'un mélange d'eau et de déchets dans la torche sont une sonde de pulvérisation (23) si le mélange est sous forme liquide ou de suspensions, ou sont une sonde d'injection (23') si le mélange est sous forme gazeuse.

18. Dispositif de destruction thermique selon la revendication 11, **caractérisé en ce que** le dispositif (8) permettant de réaliser un brassage de gaz est un venturi.

19. Dispositif de destruction thermique selon la revendication précédente, **caractérisé en ce que** le venturi a une double paroi refroidie par eau.

20. Dispositif de destruction thermique selon l'une quelconque des revendications 18 ou 19, **caractérisé en ce que** le venturi comporte une partie supérieure, appelée convergent (34), une partie inférieure, appelée divergent (42), une partie médiane, appelée col (38), reliant le convergent (34) et le divergent (42), et des orifices d'entrée d'air.

21. Dispositif de destruction thermique selon la revendication précédente, **caractérisé en ce que** le venturi comporte au moins un moyen (37) permettant de distribuer uniformément de l'air sur les parois du venturi.

22. Dispositif de destruction thermique selon la revendication précédente, **caractérisé en ce que** le au moins un moyen permettant de distribuer uniformément de l'air sur les parois du venturi est une chambre de répartition (37,40) comportant des trous disposés sur son périmètre.

23. Dispositif de destruction thermique selon la revendication 11, **caractérisé en ce que** le dispositif (10) permettant de recombiner par refroidissement au moins une partie des gaz issus du dispositif de brassage (8) est une enceinte à double paroi refroidie par eau.

24. Dispositif de destruction thermique selon l'une quelconque des revendications 11 à 23, **caractérisé en ce qu'**il comprend en outre un dispositif (17) permettant d'échanger de la chaleur avec le milieu extérieur et/ou un dispositif (18) permettant de réguler la pression à l'intérieur du dispositif de destruction.

25. Dispositif de destruction thermique selon la revendication précédente, **caractérisé en ce que** le dispositif (18) permettant de réguler la pression est un groupe vide.

26. Dispositif de destruction thermique selon l'une quelconque des revendications 11 à 25, **caractérisé en ce qu'**il comprend en outre, situé après le dispositif de recombinaison (10) de gaz, au moins un dispositif permettant de traiter chimiquement les gaz issus du dispositif de recombinaison.

27. Dispositif de destruction thermique selon la revendication précédente, **caractérisé en ce que** le au moins un dispositif permettant de traiter chimiquement les gaz issus du dispositif de recombinaison réalise une réaction choisie parmi une déhalogénisation (14), une désoxydation d'oxyde d'azote (16) et une désulfurisation.

## Claims

1. Thermal destruction process for at least one organic or halogenated organic product in liquid, gaseous or powder form, with the process involving the following steps:
- mixing:
- of the aforementioned one or more organic products with water in sufficient quantities to ensure that at least stoichiometric ratios between atoms of carbon and oxygen in the mixture are obtained,
or
- of the aforementioned one or more halogenated organic products with water in sufficient quantities to ensure that at least the stoichiometric ratios for, on the one hand, atoms of carbon and oxygen in the mixture, and on the other hand, for hydrogen and halogen atoms in the mixture are obtained,
- introduction of this mixture and of plasmagenic gases into the coil (26) of an inductively coupled plasma torch (6) to produce gas in which decomposition into atomic elements has occurred,
- an initial thermal destruction operation of the aforementioned gas in which decomposition into atomic elements has occurred, this initial destruction operation taking place in a reaction chamber (7),
- a second thermal destruction operation of the gas that has undergone the initial destruction operation, this second destruction operation taking place in a stirring device (8) with no energy being added, this gas which undergoes the second thermal destruction operation being stirred with air and/or oxygen,
- recombination by cooling (10) of at least a part of the gas emerging from the stirring device (8),
- discharge (20) of the gas that has been destroyed.

2. Thermal destruction process as in the previous claim, **characterised in that** the mixture of the at least one organic product or halogenated organic product with water is introduced at the coil (26) of the inductive plasma torch (6) in the form of a spray if the aforementioned organic product or halogenated organic product is in a liquid or powder form, or in a gaseous form if the aforementioned organic or halogenated organic product is in gaseous form.

3. Thermal destruction process as in claim 1, **characterised in that** the stirring device (8) is a venturi.

4. Thermal destruction process as in claim 1, **characterised in that** it further includes a cooling step for the gas emerging from the step of recombination by cooling (10) in a device (17) which allows heat to be exchanged with the surroundings.

5. Thermal destruction process as in any of claims 1 or 4, **characterised in that** it further comprises an analysis (12) step of the gas emerging from the step of recombination by cooling (10).

6. Thermal destruction process as in any of claims 4 or 5, **characterised in that** it further comprises a gas pressure regulation step.

7. Thermal destruction process as in the previous claim, **characterised in that** the regulation step is carried out using a pumping device (18) referred to as the vacuum plant.

8. Thermal destruction process as in any one of the previous claims, **characterised in that** it comprises at least one chemical treatment step for gas emerging from the step of recombination by cooling.

9. Thermal destruction process as in the previous claim, **characterised in that** the at least one chemical treatment step for gas is a step selected from amongst de-halogenation (14), deoxidation of nitrogen oxide (16) and desulphurisation.

10. Thermal destruction process as in any of claims 8 or 9, **characterised in that** a spray of water (13) on the gas is carried out before the chemical treatment step of the aforementioned gas is carried out.

11. Thermal destruction device for one or more organic products or halogenated organic products in liquid, gaseous or powder form, comprising .
- an inductively coupled plasma torch (6),
- means of introducing plasmagenic gases into the aforementioned torch (6),
- means (23, 23') of introducing a mixture of water and the said one or more organic products or halogenated organic products into the aforementioned torch,
- a reaction chamber (7) suitable for the thermal destruction of gas emerging from the inductively coupled plasma torch (6),
- a device (8) used to carry out the stirring of the gas emerging from the reaction chamber (7),
- means of introducing air and/or oxygen (9) into the stirring device (8),
- a device (10) that allows recombination by cooling of at least a part of the gas emerging from the stirring device,
with the inductively coupled torch (6) being connected to the reaction chamber (7), which is connected to the stirring (8), which is in turn connected to the recombination device (10).

12. Thermal destruction device as in the previous claim, **characterised in that** it comprises means for cooling the inductively coupled plasma torch, the reaction chamber, the stirring device and the recombination device.

13. Thermal destruction device as in the previous claim, **characterised in that** the aforementioned means of cooling is a cooling plant (11).

14. Thermal destruction device as in any of claims 11 or 12, **characterised in that** the reaction chamber (7) comprises a double wall (28) in which cooling water circulates.

15. Thermal destruction device as in the previous claim, **characterised in that** the internal surface of the double wall (28) is covered with a refractory material.

16. Thermal destruction device as in claim 11, **characterised in that** the introduction of plasmagenic gas into the torch is achieved using over-pressurisation.

17. Thermal destruction device as in claim 11, **characterised in that** the means for introducing a mixture of water and waste into the torch is a spray probe (23) if the mixture is in the form of a liquid or suspension, or is an injection probe (23') if the mixture is in gaseous form.

18. Thermal destruction device as in claim 11, **characterised in that** the stirring device (8) used to achieve stirring of gas is a venturi.

19. Thermal destruction device as in the previous claim, **characterised in that** the venturi has a water-cooled double wall.

20. Thermal destruction device as in any of claims 18 or 19, **characterised in that** the venturi includes an upper part, called the convergent (34), a lower part, called the divergent (42), and a central part, known as the neck (38), which connects the convergent (34) and the divergent (42), and air inlet ports.

21. Thermal destruction device as in the previous claim, **characterised in that** the venturi includes at least one means (37) for uniformly distributing air onto the venturi walls.

22. Thermal destruction device as in the previous claim, **characterised in that** the at least one means for uniformly distributing air onto the venturi walls is a distribution chamber (37, 40) which includes holes arranged around its perimeter.

23. Thermal destruction device as in claim 11, **characterised in that** the device (10) used for recombination by cooling of at least a part of the gas emerging from the stirring device (8) is a water-cooled double walled enclosure.

24. Thermal destruction device as in any one of claims 11 to 23, **characterised in that** it further includes a device (17) for exchanging heat with the surroundings and/or a device (18) for regulating the pressure inside the destruction device.

25. Thermal destruction device as in the previous claim, **characterised in that** the device (18) used to regulate pressure is a vacuum plant.

26. Thermal destruction device as in any one of claims 11 to 25, **characterised in that** it further includes at least one device for chemically treating the gas emerging from the recombination device, this at least one device being located after the gas recombination (10) device.

27. Thermal destruction device as in the previous claim, **characterised in that** the at least one device for chemically treating the gas emerging from the recombination device carries out a reaction selected from de-halogenation (14), deoxidation of nitrogen oxide (16) and desulphurisation.

## Patentansprüche

1. Verfahren zur thermischen Zerstörung mindestens eines organischen oder halogenhaltigen organischen Produkts, das in flüssiger, gasförmiger oder pulverförmiger Form vorliegt, wobei das Verfahren die folgenden Stufen umfasst:
- Mischen des mindestens einen organischen Produkts mit Wasser in einer ausreichenden Menge, um zumindest den stöchiometrischen Verhältnissen zwischen den Kohlenstoffatomen und den Sauerstoffatomen der Mischung zu genügen, oder des mindestens einen halogenhaltigen organischen Produkts mit Wasser in einer ausreichenden Menge, um zumindest den stöchiometrischen Verhältnissen zwischen den Kohlenstoffatomen und den Sauerstoffatomen der Mischung einerseits und zwischen den Sauerstoffatomen und Halogenatomen der Mischung andererseits zu genügen,
- Einführen dieser Mischung und von Plasma bildenden Gases (Plasmid-Gasen) in Höhe (im Bereich) der Spule (26) eines induktiven Plasmabrenners (6) zur Bildung von Gasen, in denen eine Zersetzung in die atomaren Elemente eingeleitet worden ist,
- erstes thermisches Zerstören der genannten Gase, in denen eine Zersetzung in atomare Elemente eingeleitet worden ist, wobei diese erste thermische Zerstörung in einer Reaktionskammer (7) abläuft,
- zweites thermisches Zerstören der Gase, die dem ersten thermischen Zerstören unterworfen worden sind, wobei dieses zweite thermische Zerstören in einer Durchmischungs- bzw. Verwirbelungseinrichtung (8) ohne Zufuhr von Energie durchgeführt wird, in der diese Gase, die einer zweiten thermischen Zerstörung unterworfen werden, mit Luft und/oder Sauerstoff durchmischt (verwirbelt) werden,
- Rekombinieren mindestens eines Teils der aus der Durchmischungseinrichtung (8) austretenden Gase durch Abkühlen (10) und
- Entsorgen (20) der zerstörten Gase.

2. Verfahren zur thermischen Zerstörung nach dem vorhergehenden Anspruch, **dadurch gekennzeichnet, dass** die Mischung aus dem mindestens einen organischen oder halogenhaltigen organischen Produkt und Wasser in Höhe (im Bereich) der Spule (26) des induktiven Plasmabrenners (6) in pulverisierter Form eingeführt wird, wenn das genannte organische oder halogenhaltige organische Produkt in flüssiger oder pulverförmiger Form vorliegt, oder in gasförmiger Form eingeführt wird, wenn das genannte organische oder halogenhaltige organische Produkt in gasförmiger Form vorliegt.

3. Verfahren zum thermischen Zerstören nach Anspruch 1, **dadurch gekennzeichnet, dass** die Durchmischungseinrichtung (8) ein Venturi ist.

4. Verfahren zum thermischen Zerstören nach Anspruch 1, **dadurch gekennzeichnet, dass** es außerdem eine Stufe zur Abkühlung der aus der Stufe der Rekombination durch Abkühlen (10) austretenden Gase in einer Einrichtung (17) umfasst, die den Wärmeaustausch mit dem äußeren Medium ermöglicht.

5. Verfahren zum thermischen Zerstören nach einem der Ansprüche 1 oder 4, **dadurch gekennzeichnet, dass** es außerdem eine Stufe (12) zum Analysieren der Gase umfasst, welche die Stufe zur Rekombination durch Abkühlen (10) verlassen.

6. Verfahren zur thermischen Zerstörung nach einem der Ansprüche 4 oder 5, **dadurch gekennzeichnet, dass** es außerdem eine Stufe zur Einstellung des Druckes der Gase umfasst.

7. Verfahren zum thermischen Zerstören nach dem vorhergehenden Anspruch, **dadurch gekennzeichnet, dass** die Stufe der Einstellung mit Hilfe einer Pumpeinrichtung (18), als Vakuumgruppe bezeichnet, durchgeführt wird.

8. Verfahren zum thermischen Zerstören nach einem der vorhergehenden Ansprüche, **dadurch gekennzeichnet, dass** es mindestens eine Stufe zur chemischen Behandlung der Gase umfasst, die aus der Stufe der Rekombination durch Abkühlen austreten.

9. Verfahren zum thermischen Zerstören nach dem vorhergehenden Anspruch, **dadurch gekennzeichnet, dass** die mindestens eine Stufe zur chemischen Behandlung der Gase eine Stufe ist, die ausgewählt wird aus einer Dehalogenierungsstufe (14), einer Stickstoffoxid-Desoxidationsstufe (16) und einer Desulfurierungsstufe.

10. Verfahren zum thermischen Zerstören nach einem der Ansprüche 8 oder 9, **dadurch gekennzeichnet, dass** eine Stufe zum Einsprühen von Wasser (13) in die Gase durchgeführt wird, bevor die Stufe der chemischen Behandlung der Gase durchgeführt wird.

11. Vorrichtung zum thermischen Zerstören mindestens eines organischen oder halogenhaltigen organischen Produkts, das in flüssiger, gasförmiger oder pulverförmiger Form vorliegt,
wobei die Vorrichtung umfasst:
- einen induktiven Plasmabrenner (6),
- Einrichtungen zur Einführung von Plasma-bildenden Gasen (Plasmid-Gasen) in den genannten Brenner (6),
- Einrichtungen (23,23') zur Einführung einer Mischung von Wasser und des mindestens einen organischen oder halogenhaltigen organischen Produkts in den genannten Brenner,
- eine Reaktionskammer (7), die geeignet ist, eine thermische Zerstörung der Gase zu ermöglichen, die aus dem induktiven Plasmabrenner (6) austreten,
- eine Einrichtung (8), die das Durchmischen der aus der Reaktionskammer (7) austretenden Gase ermöglicht,
- Einrichtungen (9) zur Einleitung von Luft und/oder Sauerstoff in die Durchmischungseinrichtung (8), und
- eine Einrichtung (10), welche die Rekombination mindestens eines Teils der aus der Durchmischungseinrichtung austretenden Gase durch Abkühlen ermöglicht,
wobei der induktive Brenner (6) mit der Reaktionskammer (7) verbunden ist, die mit der Durchmischungseinrichtung (8) verbunden ist und die mit der Rekombinationseinrichtung (10) verbunden ist.

12. Vorrichtung zum thermischen Zerstören nach dem vorhergehenden Anspruch, **dadurch gekennzeichnet, dass** sie Einrichtungen zum Abkühlen des induktiven Plasmabrenners, der Reaktionskammer, der Durchmischungseinrichtung und der Rekombinationseinrichtung umfasst.

13. Vorrichtung zum thermischen Zerstören nach dem vorhergehenden Anspruch, **dadurch gekennzeichnet, dass** die genannten Kühlungseinrichtungen eine Kühlzentrale (11) darstellen.

14. Vorrichtung zum thermischen Zerstören nach einem der Ansprüche 11 oder 12, **dadurch gekennzeichnet, dass** die Reaktionskammer (7) eine Doppelwand (28) aufweist, in der die Kühlflüssigkeit zirkuliert.

15. Vorrichtung zum thermischen Zerstören nach dem vorhergehenden Anspruch, **dadurch gekennzeichnet, dass** die innere Oberfläche der Doppelwand (28) von einem schwerschmelzbaren (feuerfesten) Material bedeckt ist.

16. Vorrichtung zum thermischen Zerstören nach Anspruch 11, **dadurch gekennzeichnet, dass** die Einführung der Plasma-bildenden Gase (Plasmid-Gase) in den Brenner durch Überdruck durchgeführt wird.

17. Vorrichtung zum thermischen Zerstören nach Anspruch 11, **dadurch gekennzeichnet, dass** die Einrichtungen zur Einführung einer Mischung von Wasser und Abfällen in den Brenner eine Zerstäubungssonde (23) darstellen, wenn die Mischung in flüssiger oder suspendierter Form vorliegt, oder eine Injektionssonde (23') darstellen, wenn die Mischung in gasförmiger Form vorliegt.

18. Vorrichtung zum thermischen Zerstören nach Anspruch 11, **dadurch gekennzeichnet, dass** die Einrichtung (8), welche die Durchführung eines Durchmischens (Verwirbelns) der Gase erlaubt, ein Venturi ist.

19. Vorrichtung zum thermischen Zerstören nach dem vorhergehenden Anspruch, **dadurch gekennzeichnet, dass** der Venturi eine Doppelwand aufweist, die durch Wasser gekühlt ist.

20. Vorrichtung zum thermischen Zerstören nach einem der Ansprüche 18 oder 19, **dadurch gekennzeichnet, dass** der Venturi einen oberen Abschnitt, als konvergenter Abschnitt (34) bezeichnet, einen unteren Abschnitt, als divergenter Abschnitt (42) bezeichnet, einen dazwischen liegenden Abschnitt, als Hals (38) bezeichnet, der den konvergenten Abschnitt (34) und den divergenten Abschnitt (42) verbindet, und Lufteintrittsdüsen bzw. -öffnungen umfasst.

21. Vorrichtung zum thermischen Zerstören nach dem vorhergehenden Anspruch, **dadurch gekennzeichnet, dass** der Venturi mindestens eine Einrichtung (37) aufweist, welche die gleichförmige Verteilung der Luft auf die Wände des Venturi erlaubt.

22. Vorrichtung zum thermischen Zerstören nach dem vorhergehenden Anspruch, **dadurch gekennzeichnet, dass** die mindestens eine Einrichtung, welche die gleichförmige Verteilung der Luft auf die Wände des Venturi erlaubt, eine Verteilungskammer (37,40) darstellt, die in ihrem Umfang (Perimeter) angeordnete Löcher aufweist.

23. Vorrichtung zum thermischen Zerstören nach Anspruch 11, **dadurch gekennzeichnet, dass** die Einrichtung (10), die das Rekombinieren mindestens eines Teils der aus der Durchmischungseinrichtung (8) austretenden Gase durch Abkühlen erlaubt, ein Behälter mit Doppelwand ist, die mit Wasser gekühlt ist.

24. Vorrichtung zum thermischen Zerstören nach einem der Ansprüche 11 bis 23, **dadurch gekennzeichnet, dass** sie außerdem umfasst eine Einrichtung (17), die den Wärmeaustausch mit dem äußeren Medium erlaubt, und/oder eine Einrichtung (18), welche die Einstellung des Druckes im Innern der Vorrichtung zum thermischen Zerstören erlaubt.

25. Vorrichtung zum thermischen Zerstören nach dem vorhergehenden Anspruch, **dadurch gekennzeichnet, dass** die Einrichtung (18), welche die Einstellung des Druckes erlaubt, eine Vakuumgruppe ist.

26. Vorrichtung zum thermischen Zerstören nach einem der Ansprüche 11 bis 25, **dadurch gekennzeichnet, dass** sie außerdem mindestens eine nach der Einrichtung (10) zum Rekombinieren der Gase angeordnete Einrichtung aufweist, welche die chemische Behandlung der aus der Rekombinationseinrichtung austretenden Gase erlaubt.

27. Vorrichtung zum thermischen Zerstören nach dem vorhergehenden Anspruch, **dadurch gekennzeichnet, dass** in der mindestens einen Einrichtung, welche die chemische Behandlung der aus der Rekombinationseinrichtung austretenden Gase erlaubt, eine Reaktion, ausgewählt aus der Gruppe Dehalogenierung (14), Stickstoffoxiddesoxidation (16) und Desulfurierung, durchgeführt wird.
